# EUROPEAN PATENT APPLICATION

(11) **EP 0 971 216 A2**
(43) Date of publication of application: **12.01.2000**
(21) Application number: 99600001.4
(22) Date of filing: 13.01.1999
(51) Int. Cl.: G01G 23/00

(54) **Intelligent digital junction box**

(30) Priority: 13.01.1998 GR 20000159
(71) Applicant: Leon Engineering A.B.E., 115 27 Athens (GR)
(72) Inventor: Nikolaos, Leon, 115 27 Athens (GR); Ischak, Niko Leon, 115 27 Athens (GR)
(74) Representative: Vardikos, Christos Th.

(57) **Abstract**

Strain gauge loadcell junction box, used in weighing systems, with incorporated electronics, in the form of a printed circuit board, containing the loadcell, power and communication connections, the multiplexer/ amplifier and ratiometric analog to digital converter, the controlling microprocessor and power conditioning and communication circuits. The device compensates digitally the corner difference of the loadcell outputs, averages and gives the total system output, utilizing calibration procedures and algorithms, stores in the microprocessor, in serial form

## Description

### STATE OF THE ART

Weighing systems use predominantly strain gauge loadcells as the weight sensing elements. The loadcells generate low. level analogue signals. which are converted to weight information by dedicated instruments.

These low level signals are affected by electromagnetic interference (EMC) and temperature and humidity variations. with a consequent reduction in system accuracy and integrity.

When a weighing system incorporates a number of load cells. connected in parallel. the mechanical construction and output impedance loading of each load cell. create the so called "Corner Error" i.e. the difference in reading of the same load placed at different positions on the weighing system.

The manufacture of compensated load cells requires a considerable amount of "hand building" together with significant testing to achieve approvable performance.

To minimize the "Corner error" the system requires the adjustment of individual load cells output. These adjustments are generally time consuming and require skilled personnel in order to be carried out effectively. Moreover test load placement may be particularly difficult in high capacity systems. silos. hoppers. belt scales and others.

The output of multiple load cell systems is the average of the individual output. It is possible for a load cell to fail without being noticed degrading system accuracy.

Even when a failure is realized it may be difficult to identify, replace the faulty component and calibrate the system of original accuracy specification.

Technically a weighing system s accuracy, reliability depends mainly on
- System calibration. commissioning
- Vibration and noise interference
- Long cable runs
- Environmental sealing
- Diagnostics. fault finding
- Replacement of components.

The previously mentioned difficulties may be overcome by a "smart" load cell conditioning unit where load cell characteristics are stored in EPROM permanently fitted inside the module.

### DESCRIPTION OF THE INVENTION

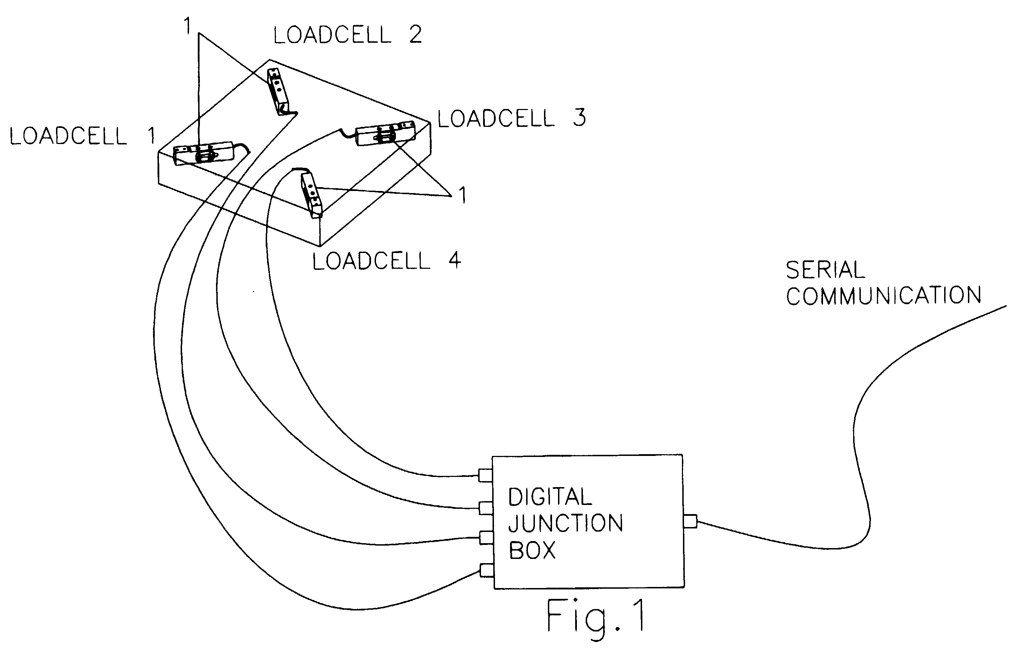

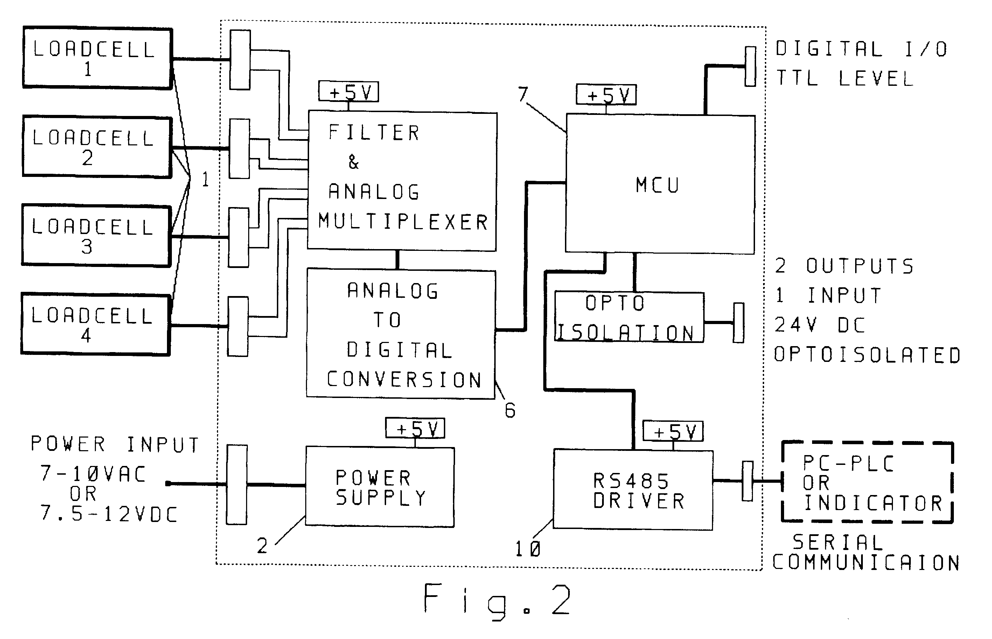

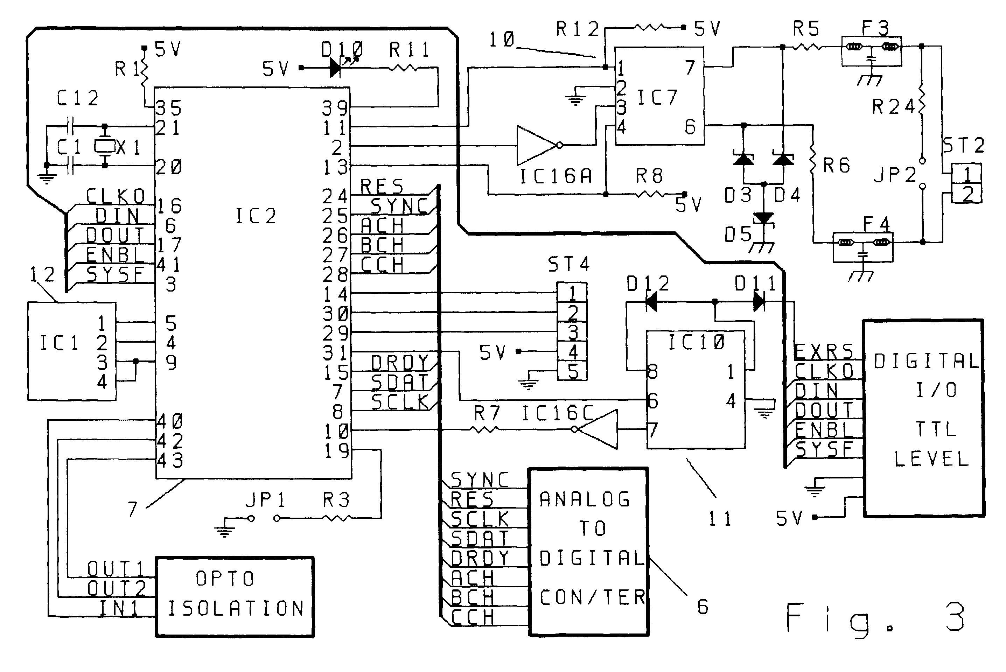

The intelligent digital junction box makes use of modern and sophisticated electronics to correct for linearity and compensation basic analogue strain gauge loadcells (1) with high level of stability and repeatability. The application is shown at Fig. 1.

The device consists of printed circuit board at Fig. 7 containing the load cell connection pads. and converts the load cell output signal to a digital form.

An internal power regulator (2) with an AC/DC input provides a common excitation for the loadcells and analogue circuits plus 5v dc for the digital circuits.

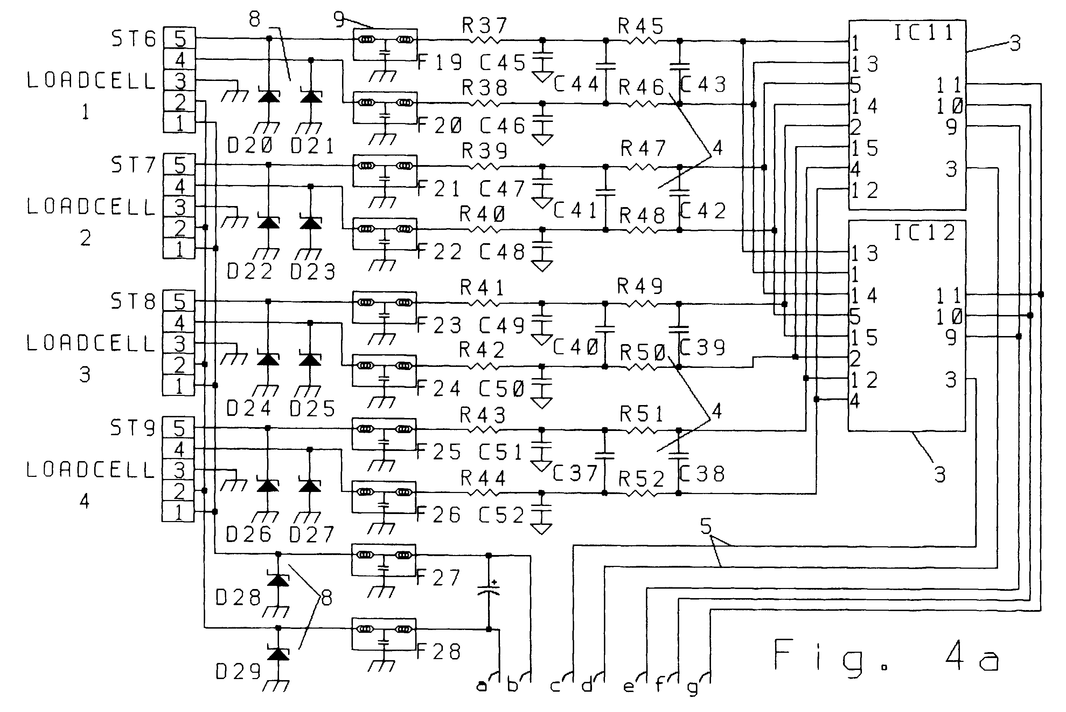

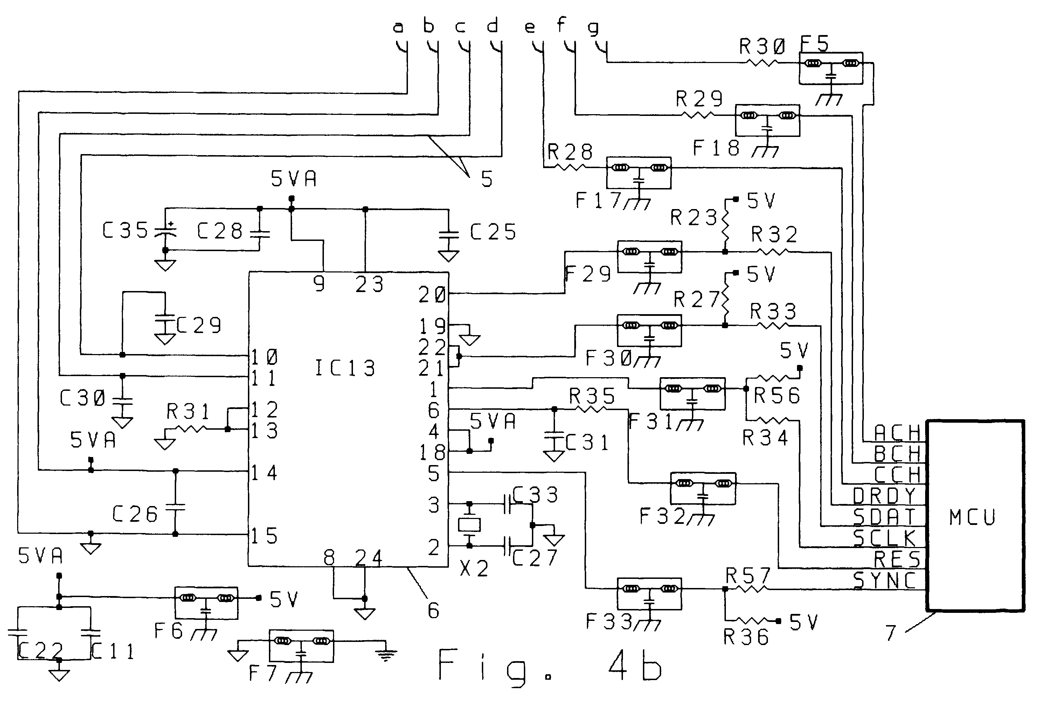

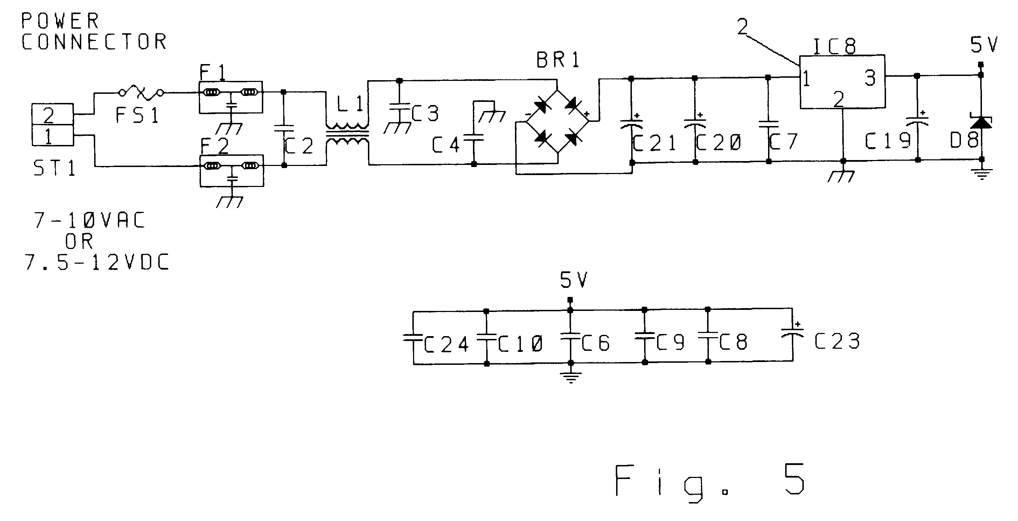

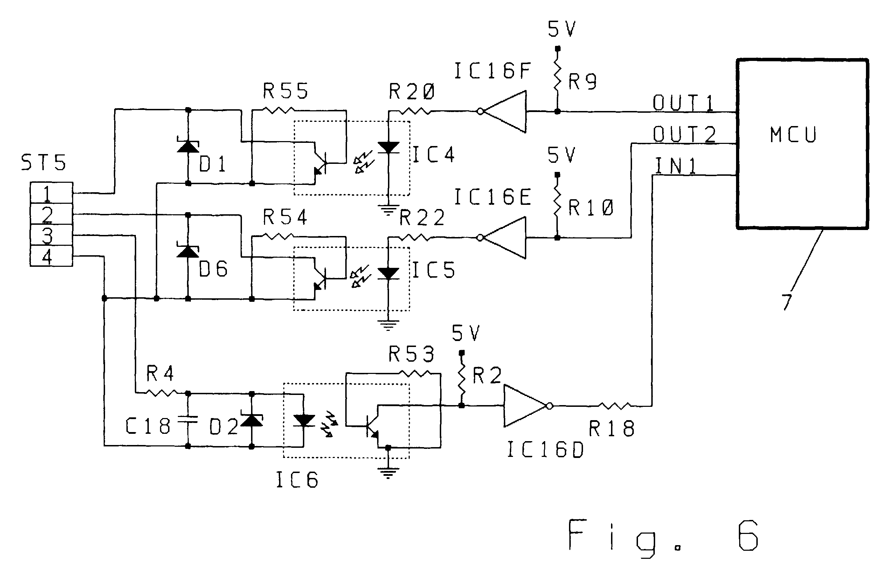

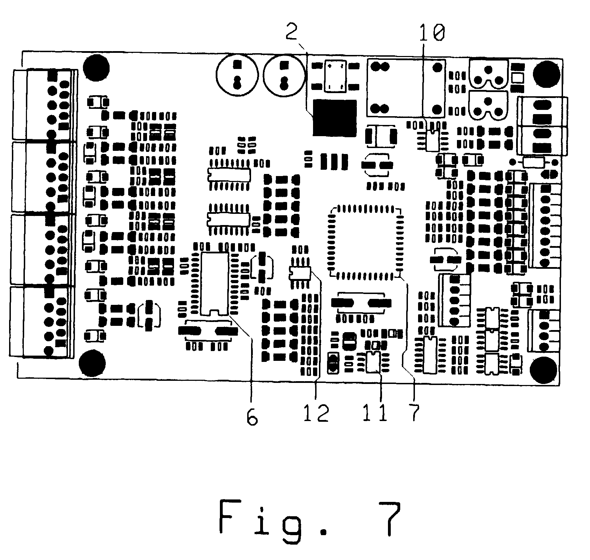

The signal output of each load cell is fed into an instrumentation amplifier via a proprietary sequence and phase alternating stage (3) that minimizes temperature drift due to thermocouple effects. The input stage includes analogue filters (4) for each load cell (Fig. 4a).

The analogue amplifier output (5) is fed into an advanced 24 bit Sigma-Delta analogue to digital converter (6) with digital filtering (Fig. 4b).

A microprocessor (7) with non-volatile memory controls load cell conversion sequence and phase/speed of conversion additional filtering. compensation algorithms. communication. and corner and scale calibration procedures.

A temperature measurement device maybe optionally be placed on the board directly connected to the microprocessor (7).

The intelligent digital junction box's printed circuit board (Fig. 7) is protected against electromagnetic interference by surge protector combination (8) and input-output EMI line filters (9). Fig 4a. The unit is compatible with the European EMC directive and the metrological standard EN45501.

The microprocessor (7) measures the output of each load cell. compensates and averages the load cell outputs to give the overall system output. In fact the operation is similar to as each load cell operates as a stand alone device i.e. like having 4 digital loadcells. but with one electronic circuit.

Communication is effected by a dedicated port operating with the RS 485A standard (10) for multidrop applications. where each digital junction box has a unique programmable address in the network. Communication software is based on a proprietary. ASCII standard command set.

The intelligent digital junction box's digital output is in units of weight ready to be displayed. Zero. Tare. No motion. Error detection. are performed internally.

Scale calibration is also handled internally via a flexible scale parameter setting and a fully digital "Corner compensation", Zero and Span calibration.

The "Corner compensation" procedure is proprietary and allows current ( to 10.000d) factor calculations with test weight of only 10% placed on the corner. The test weight does not have to be placed exactly on the corner but anywhere sufficiently closer to the measured corner than the other corners.

The test weight placement is dictated by the intelligent digital junction box and is one pass. Corner adjustment maybe perfonned from the loadcells mV/V out obtained from the data sheets.

Zero and Span calibration are one pass also that is there is no interaction between Zero and Span. Span adjustment maybe performed by test weights or by the mV/V output of the loadcells.

All calibration calculations are performed on stable average measurements.

The digital junction box includes an internal diagnostic system continuously cycling to verity operation of the power supply (11). microprocessor (7). EEPROM (12). analogue to digital processor (6) and load cell input with appropriate error output.

### INDICATOR JUNCTION BOX

A digital junction box with the weight display and keyboard specification as per digital junction box and weight indicator combined.

## Claims

1. Strain gauge loadcell junction box used in weighing systems, with incorporated electronics, in the form of a printed circuit board, containing the loadcell, power and communication connections, the multiplexer/amplifier and ratiometric analog to digital converter, the controlling microprocessor and power conditioning and communication circuits. The device compensates digitally the corner difference of the loadcell outputs, averages and gives the total system output, utilizing calibration procedures and algorithms, stored in the microprocessor, in serial form.

2. Method for the automatic correction of the corner error, including corner calibration algorithm and procedure through a digital junction box mentioned in the claim 1.

3. Digital junction box of the claim 1 containing the connections of at least two loadcells, and without upper limit.
